# EUROPÄISCHE PATENTSCHRIFT

(11) **EP 3 487 441 B1**
(45) Veröffentlichungstag und Bekanntmachung des Hinweises auf die Patenterteilung: **13.10.2021**
(21) Anmeldenummer: 17751231.6
(22) Anmeldetag: 18.07.2017
(51) Int. Cl.: A61C 8/00

(54) **DENTALER SUPRASTRUKTURTRÄGER MIT BESONDERER INNEN- UND AUSSENGEOMETRIE**
DENTAL SUPERSTRUCTURE SUPPORT HAVING SPECIAL INNER AND OUTER GEOMETRY
SUPPORT DE SUPERSTRUCTURE DENTAIRE PRÉSENTANT UNE GÉOMÉTRIE INTÉRIEURE ET EXTÉRIEURE PARTICULIÈRE

(30) Priorität: 20.07.2016 DE 102016008668
(43) Veröffentlichungstag der Anmeldung: 29.05.2019
(73) Patentinhaber: Spindler, Bruno, 77728 Oppenau (DE)
(72) Erfinder: Spindler, Bruno, 77728 Oppenau (DE)
(74) Vertreter: Thämer, Wolfgang
(86) Internationale Anmeldenummer: PCT/DE2017/000211
(87) Internationale Veröffentlichungsnummer: WO 2018/014896

(56) Entgegenhaltungen:
- WO-A2-2014/012973
- WO-A2-2014/012973
- DE-A1-102013 013 565
- DE-U1- 9 417 182

## Beschreibung

Die Erfindung betrifft einen Suprastrukturträger als Teil eines prothetischen Zahnersatzes zwischen einem Implantatkörper und einer Suprakonstruktion, mit einem hohlen Implantatpfosten, einem hohlen Implantatzapfen und einem dazwischen liegenden Implantatflansch. Die Aushöhlungszonen des Implantatpfostens und des Implantatzapfens gehen - zur Durchführung und Aufnahme einer den Suprastrukturträger und den Implantatkörper verbindenden Schraube - ineinander über.

In der zahnärztlichen Implantologie wird u.a. im Rahmen der Herstellung eines prothetischen Einzelzahnersatzes häufig ein enossaler Implantatkörper verwendet, der die Prothese trägt. In diesem Fall wird der Implantatkörper, eine Art Schraubdübel, in einer künstlich im Patientenkiefer erzeugten Bohrung eingeschraubt. Der eingeschraubte Implantatkörper nimmt bei der fertigen Prothese einen Suprastrukturträger auf. Letzterer wird beispielsweise verdrehsicher im Implantatkörper mit einer speziellen Schraube verschraubt. Auf den Suprastrukturträger wird direkt oder indirekt eine die sichtbare Zahnkrone bildende Suprastruktur, z.B. durch Verkleben, aufgesetzt.

Aus der DE 20 2012 102 746 U1 ist ein Zahnimplantataufbausystem bekannt, bei dem ein Implantatkörper, ein Suprastrukturträger, ein Klebekörper und eine künstliche Krone einen künstlichen Zahnersatz bilden.

Die DE 94 17 182 U1 beschreibt einen Implantatbausatz, bei dem das Abutment mit einer Schraube am Implantat befestigt wird. Dabei ist der Implantatpfosten des Abutments gegenüber dem Implantatzapfen abgewinkelt angeordnet. Die Ausnehmung des Abutments, in der die Schraube aufgenommen wird, ist eine gerade Stufenbohrung. Die Öffnung der Stufenbohrung, durch die die Schraube eingeführt wird, befindet sich in der Seitenwandung des Implantatpfostens.

Aus der WO 2014/012973 A2 ist ein Zahnimplantataufbausystem bekannt, bei dem ein Implantatkörper, ein Suprastrukturträger, ein Klebekörper und eine künstliche Krone einen künstlichen Zahnersatz bilden. Der Suprastrukturträger hat zur Abstützung der künstlichen Krone eine zum Implantatpfosten orientierte Abstützhüllfläche, die eine abgesenkte bukkale Außenschulter aufweist.

Die DE 10 2013 013 565 A1 beschreibt ebenfalls ein Zahnimplantataufbausystem, bei dem die künstliche Krone auf einer zum Implantatpfosten hin orientierten räumlich gekrümmten Abstützhüllfläche aufliegt.

Der vorliegenden Erfindung liegt die Problemstellung zugrunde, einen Suprastrukturträger so zu verbessern, dass eine sichere und dauerhafte Schraubverbindung mit dem Implantatkörper gewährleistet ist.

Diese Problemstellung wird mit den Merkmalen des Patentanspruchs 1 gelöst. Dabei hat die obere und die untere Aushöhlungszone jeweils eine Mittellinie, die sich beide in einer mittleren Aushöhlungszone schneiden. An die untere Aushöhlungszone des Implantatzapfens schließt sich eine sich zum Implantatflansch aufweitende Schraubenkopfsitzfläche an. Zwischen der oberen Aushöhlungszone und der Schraubenkopfsitzfläche befindet sich eine mittlere Aushöhlungszone, die eine gekrümmte Ausnehmung ist, in der sich die obere Aushöhlungszone als zylindrische Bohrung und die Schraubenkopfsitzfläche als Innenkonus, in kantenfreien tangentialen Übergängen aneinander anschließen. Zumindest Bereiche des Implantatflansches bilden eine zum Implantatpfosten hin orientierte Abstützhüllfläche, deren äußerer Rand eine Bezugsebene aufspannt, die von der Mittellinie der pfostenseitigen Aushöhlungszone senkrecht geschnitten wird. Die Mittellinien des Implantatpfostens und des Implantatzapfens schneiden oder kreuzen sich unterhalb der Bezugsebene.

Der Suprastrukturträger ist zwischen einem Implantatkörper und einer Suprastruktur angeordnet, wobei der Suprastrukturträger in einem klebekörper- und/oder kronentragenden Bereich einen Implantatpfosten und in dem dem Zahnfleisch und dem Implantatkörper zugewandten Bereich mindestens einen Implantathals aufweist. Der Suprastrukturträger wird aus einem Rohling gefertigt, der z.B. mittels eines Pulverspritzgießverfahrens hergestellt wird. Als Metallpulver wird hier beispielsweise die Titanlegierung Ti6A14V verwendet. Der Rohling erhält im klebekörper- und/oder kronentragenden Bereich durch die Spritzgießform eine der Fertigform mathematisch ähnliche Form. Der Rohling erhält in dem dem Zahnfleisch und dem Implantatkörper zugewandten Bereich durch die Spritzgießform die Form eines Rohzapfens. Der Rohzapfen erhält durch mechanisch und/oder optisch trennende Bearbeitung seine Fertigform, wobei ein dem Zahnfleisch zugewandter Implantatflansch entsteht, in dessen dem Zahnfleisch zugewandten Fläche zumindest bereichsweise eine Struktur eingearbeitet wird.

Der Suprastrukturträger hat einen Implantatpfosten, dessen äußere Gestalt einem geraden Kegelstumpf entspricht. Der Implantatpfosten basiert auf dem Implantatflansch des Suprastrukturträgers, vom dem er senkrecht absteht. Der äußere Rand des Implantatflansches hat beispielsweise eine Kreisform, deren Mittelpunkt konzentrisch zur Mittellinie des Implantatpfostens orientiert ist. Auf diese Weise ist auf dem einzelnen Implantatpfosten z.B. ein Klebekörper und/oder eine Zahnkrone aufsetzbar, der bzw. die z.B. aus einem rotationssymmetrischen Rohling gefertigt sind.

Der Suprastrukturträger hat eine durchgehende, abgewinkelte Aushöhlung, die zum einen einen innenliegenden Schraubensitz und zum anderen einen gekrümmten Schraubeneinführkanal aufweist. Der im Bereich des unteren Endes der Aushöhlung gelegene Schraubensitz befindet sich unterhalb der axialen Montagefuge des Implantatflansches, wodurch die Schraube, die den Suprastrukturträger auf dem Implantatkörper fixiert, einen tiefliegenden, stabilen Sitz erhält. Die fest und dicht anliegende Zone der Montagefuge, die zwischen dem Kopf der Schraube und dem Suprastrukturträger liegt, befindet sich bei montiertem prothetischen Zahnersatz auf der Höhe, in der auch die fest und dicht anliegende Zone der Montagefuge positioniert ist, die zwischen dem Implantatkörper und dem Suprastrukturträger angeordnet ist. Die Klemmkraft der Schraubverbindung sorgt im Bereich der genannten Montagefugenzone u.a. für eine radiale, die Dichtwirkung und Stabilität fördernde Kraftkomponente. Zugleich ist durch die tiefliegende Schraubenkopfposition die durch thermische Dehnung verursachte Belastung minimal, da der Abstand der Klemmkrafteinleitung zwischen dem Schraubenkopf und dem oberen Bereich des Implantatgewindes sehr kurz ist. Auch ermöglicht das Tiefersetzen der Schraube eine knochennähere Abwinkelung des Suprastrukturträgers, wodurch eine Anpassung der Prothese an einen teilweise resorbierten Kieferknochen oder an Zahnfleischbereiche erleichtert wird, die eine geringe Materialstärke aufweisen.

Weitere Einzelheiten der Erfindung ergeben sich aus den Unteransprüchen und der nachfolgenden Beschreibung schematisch dargestellter Ausführungsformen.
- Figur 1:: Explosionsmodell eines prothetischen Zahnersatzes;
- Figur 2:: Seitenansicht des prothetischen Zahnersatzes;
- Figur 3:: Längsschnitt durch einen prothetischen Zahnersatz, vergrößert;
- Figur 4:: Suprastrukturträger, perspektivisch;
- Figur 5:: Suprastrukturträger im Längsschnitt mit planer Abstützhüllfläche;
- Figur 6:: wie Figur 5, jedoch mit nach oben gewölbter Abstützhüllfläche;
- Figur 7:: wie Figur 5, jedoch mit nach unten gewölbter Abstützhüllfläche.

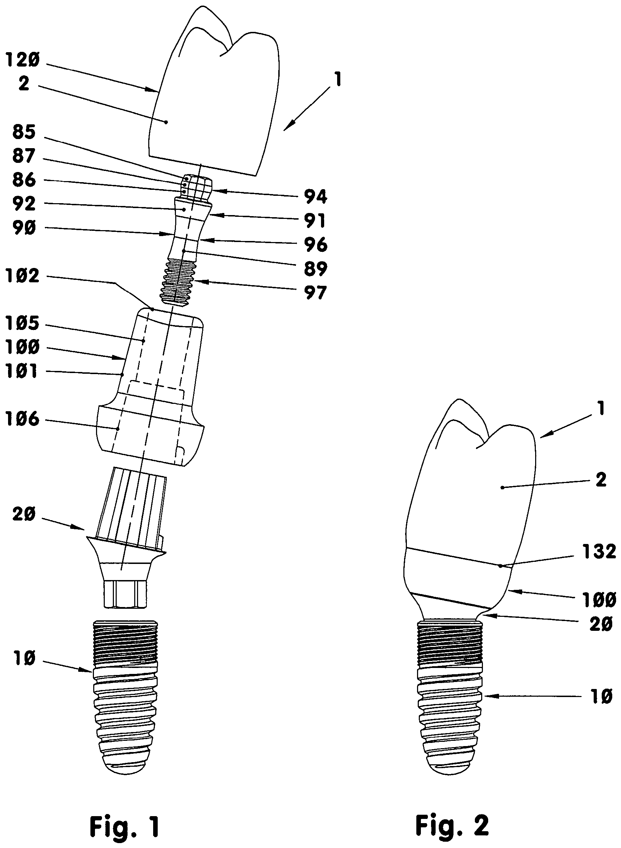

Die Figur 1 zeigt beispielhaft alle Teile eines künstlichen Zahnes (1) in Form einer Explosionszeichnung. Als Basis dient ein hohlschraubenartiger Implantatkörper (10). Mit ihm wird ein Suprastrukturträger (20) in Kombination mit einem z.B. aufgeklebten Klebekörper (100) mittels einer speziellen Außensechskantschraube (90) verdrehsicher verschraubt. Auf den Klebekörper (100) wird in der Regel eine künstliche Zahnkrone (120) aufgesetzt und verklebt.

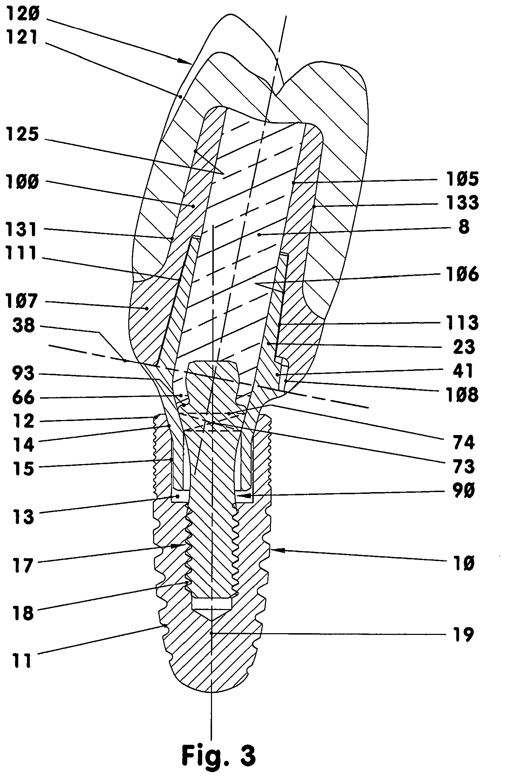

Der Implantatkörper (10) ist nach den Figuren 1 bis 3 eine Hohlschraube mit einem ggf. selbstschneidenden, z.B. nichtmetrischen Außengewinde (11). Er weist z.B. bei einem Durchmesser von 3,53 mm eine Länge von 8,42 mm auf. Der Implantatkörper (10) hat eine mehrstufige Ausnehmung (13), die hier in drei Zonen aufgeteilt ist, vgl. Figur 3. Die erste Zone (14) - sie liegt im Bereich der Implantatschulter (12) des Implantatkörpers (10) - ist beispielsweise ein Innenkonus (14), der z.B. bei einer Höhe von 0,65 mm einen Kegelwinkel von z.B. 30 Winkelgraden aufweist, vgl. Figur 3. Der Innenkonus (14) geht - als Teil der zweiten Zone (15) - in eine als Verdrehsicherung dienende Ausgestaltung über, die z.B. die Form eines Innensechskants hat. Der Innensechskant (15) verwendet z.B. bei einer Höhe von 2,89 mm eine Schlüsselweite von 2,1 mm. An den Innensechskant (15), der z.B. auch ein Doppelinnensechskant oder eine andere form- oder kraftschlüssige Verdrehsicherungsgeometrie sein kann, schließt sich ggf. - hier nicht dargestellt - ein die Zentrierung des Suprastrukturträgers (20) im Implantatkörper (10) unterstützender Zylindersitz an. Der z.B. kurze Zylindersitz hat dann einen Durchmesser, der der Schlüsselweite des Innensechskants (15) entspricht.

Die dritte Zone (17) ist eine Gewindebohrung, die bei der Montage die den Suprastrukturträger (20) haltende Außensechskantschraube (90) aufnimmt. Hinter dem Ende des z.B. 2,9 mm langen M 1,6-Innengewindes (18) befindet sich z.B. ein kurzer zylindrischer Gewindeauslauf.

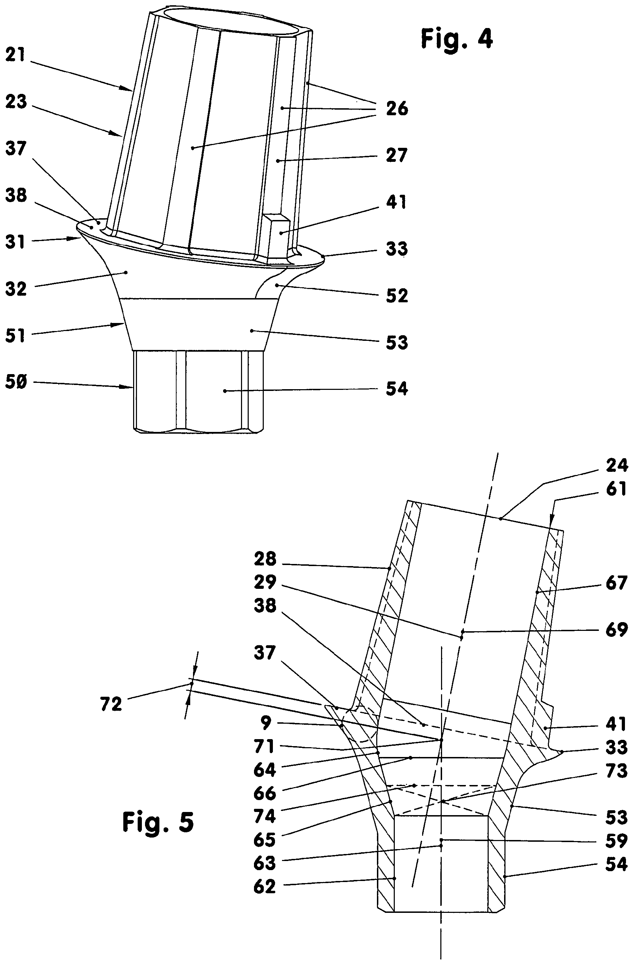

Der z.B. 7,67 mm lange Suprastrukturträger (20) hat primär die Aufgabe - im Implantatkörper (10) sitzend - als Basis für die künstliche Zahnkrone (120) zu dienen. Er hat einen Bereich (51), der dem Implantatkörper (10) zugewandt ist und einen Bereich (21), der die Zahnkrone (120) bzw. die Suprastruktur aufnimmt, vgl. Figuren 4 und 5.

Der dem Implantatkörper (10) zugewandte Bereich (51) ist der hohle Implantatzapfen (50). Dieser besteht aus einem z.B. im Mittel 1,04 mm langen Implantathals (52) mit seinem z.B. 0,94 mm langen Außenkonus (53), einem z.B. 1,5 mm langen Außensechskant (54) der Schlüsselweite von 2,1 mm und einem ggf. vorhandenen kurzen Zylinderansatz. Letzterer ist hier nicht dargestellt.

Der Außenkonus (53) und der Außensechskant (54) sitzen passgenau in der Ausnehmung (13) des Implantatkörpers (10). In der zur Spitze des Implantatkörpers (10) weisenden axialen Richtung kontaktieren die Stirnflächen des Außensechskants (54) und der ggf. vorhandene kurze Zylinderansatz die Ausnehmung (13) nicht.

Oberhalb des Implantatkonus (53) schließt sich ein beispielsweise tellerartiger Implantatflansch (31) an, der z.B. mit einem stetigen Übergang aus dem Implantathals (52) hervorgeht, vgl. Figuren 4 bis 7. Die Unterseite (32) des z.B. runden Implantatflansches (31) hat zumindest bereichsweise die Form des Mantels eines Kegelstumpfes, dessen Konuswinkel sich zur Zahnkrone (120) hin öffnet. Der Konuswinkel liegt z.B. zwischen 90 und 135 Winkelgraden. Ggf. besteht die Unterseite des Implantatflansches (31) auch aus mehreren auseinander hervorgehenden teilweise ungeraden Kegelkonen, wobei jeder gegenüber der Mittellinie (29) einen anderen Winkel einschließt. Die Übergänge zwischen den Kegelkonen sind ggf. ausgerundet. Anstelle eines Teils der Kegelkonen des Implantathalses (52) können auch Freiformflächen verwendet werden.

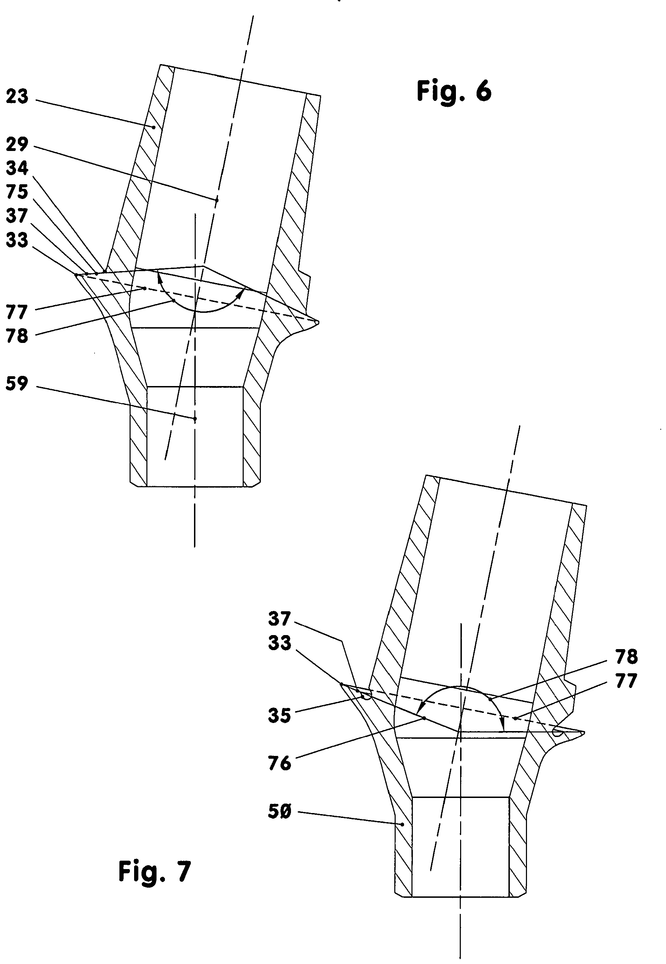

Der äußere Rand (33) des Implantatflansches (31).hat hier einen ggf. veränderlichen Abstand zur Mittellinie (29). Im Ausführungsbeispiel ist er konstant. Er beträgt z.B. 2,23 mm. Der Rand (33) ist dabei die äußere Begrenzung der Bezugsebene (38) oder der Stirnflächen (77) nach den Figuren 6 und 7. Der äußere Rand (33) erfährt hierbei in Längsrichtung der Mittellinie (29) im Ausführungsbeispiel keinen Höhenversatz. Bei anderen Ausführungsbeispielen ist er jedoch zumindest bereichsweise denkbar. Er kann dann z.B. bis zu 2 mm erreichen.

Oberhalb des Implantatflansches (31) erstreckt sich der Bereich (21) des Suprastrukturträgers (20) in Form eines Implantatpfostens (23).

Der z.B. 4,03 mm hohe, hohle Implantatpfosten (23) hat hier die Form eines sechseckigen geraden Pyramidenstumpfes. Der Pyramidenstumpf hat hier sechs lange Pyramidenkanten, in deren Bereich die Stollen (26) angeordnet sind. Die radial nach außen orientierten Außenflächen (27) der Stollen (26) sind Teilflächen einer gedachten Hüllfläche (28) in Form eines z.B. geraden Kegelstumpfmantels. Die Außenflächen (27) können dabei auf, unter oder über den theoretischen Pyramidenkanten liegen. Der Über- oder Unterstand kann bis zu 0,2 mm betragen. Der Kegelwinkel der Hüllfläche (28) misst in der Regel 5 bis 12 Winkelgrade. Hier beträgt der Kegelwinkel z.B. 7,36 Winkelgrade. Die kegelstumpfmantelförmige Hüllfläche (28) verjüngt sich mit zunehmender Entfernung vom Implantatflansch (31).

In den Figuren 4 und 5 hat der Implantatpfosten (23) z.B. in der Nähe des Implantatflansches (31) auf einem der Stollen (26) einen z.B. 0,85 mm langen Verdrehsicherungssteg (41), der über die gedachte kegelstumpfmantelförmige Hüllfläche (28) um beispielsweise 0,25 mm übersteht. Die Breite des Verdrehsicherungsstegs (41) beträgt im Mittel z.B. 0,58 mm. Durch diese spezielle Form des Implantatpfostens (23) ergibt sich eine verdrehsichernde Basis für den zu tragenden Klebekörper (100).

Nach oben hin schließt der Implantatpfosten (23) mit einer ggf. auch als Auflagefläche dienenden Oberseite (24) ab. Letztere, vgl. Figur 5, ist hier normal zur Mittellinie (29) ausgerichtet.

Der Implantatpfosten (23) hat z.B. einen ausgerundeten Übergangsbereich (34) zum Implantatflansch (31) hin. Um den Übergangsbereich (34) herum hat der Implantatflansch (31), nach den Figuren 4 und 5, eine - eine Ebene (38) bildende - Flanschoberseite (37). Die durch den Rand (33) außen begrenzte Ebene (38) wird von der Mittellinie (29) z.B. mittig und senkrecht geschnitten. Die großflächige Flanschoberseite (37) bildet u.a. eine Aufsitzfläche für den Klebekörper (100) und/oder die Zahnkrone (120).

Der ausgerundete Übergangsbereich (34) kann auch in axialer Richtung parallel zur Mittellinie (29) um bis zu 0,2 mm vertieft werden, so dass zwischen der flächigen Flanschoberseite (37) und dem Implantatpfosten (23) eine z.B. umlaufende Rinne (35) entsteht, vgl. Figur 7.

Zusätzlich ist der Suprastrukturträger (20) zumindest oberhalb des Implantatflansches (31) mit einer Titannitridbeschichtung ausgestattet. Ihre Schichtdicke beträgt z.B. 1 bis 4 µm. Alternativ können dort auch dünnwandige Keramik- oder Copolymerbeschichtungen aufgetragen sein.

Nach Figur 1 hat der Suprastrukturträger (20) eine durchgehende Aushöhlung (61), die im mittleren Bereich eine Knickstelle mit einem eingeschlossenen Winkel von 73 ± 13 Winkelgraden aufweist. Die fertig bearbeitete Aushöhlung (61) besteht aus drei Aushöhlungszonen. Die untere Aushöhlungszone (62) gehört zum Implantatzapfen (50). Sie ist z.B. eine zylindrische Bohrung der Länge von z.B. 1,81 mm, deren Durchmesser z.B. 1,73 mm beträgt. An sie schließt sich der nach oben aufweitende Innenkonus (65) an. Der z.B. 1,08 mm hohe Innenkonus hat einen Kegelwinkel von z.B. 30 Winkelgraden. Er dient der Auflage des Kopfabschnitts der Schraube (90) und liegt unterhalb der Bezugsebene (38). Die Bohrung (62) und der Innenkonus (65) haben eine gemeinsame Mittellinie (63), die sich z.B. mit der an der Außenwandung des Implantatzapfens (50) orientierenden Mittellinie (59) deckt.

Nach Figur 3 wird diese Bohrung (62) - bei montierter Prothese - vom Schaft (96) der Außensechskantschraube (90) durchquert, wobei deren Schaft (96) die Wandung der Bohrung (62) nicht kontaktiert.

Die obere Aushöhlungszone (67), die im Implantatpfosten (23) verläuft, ist eine zylindrische Bohrung, deren Durchmesser z.B. bei einer Länge von 3,7 mm 2,42 mm misst. Sie dient der Einführung der Schraube (90) und der Führung des Werkzeuges, mit der die Schraube (90) angezogen wird. Ihre Mittellinie (69) ist z.B. konzentrisch zur außenwandungsorientierten Mittellinie (29) des Implantatpfostens (23) ausgerichtet. Die Bohrung (67) endet z.B. ca. 0,33 mm vor der Bezugsebene (38) des Implantatflansches (31).

Beide Mittellinien (63) und (69) schneiden sich im Ausführungsbeispiel in der mittleren Aushöhlungszone (64) in einem Schnittpunkt (71), der die obere (67) und die untere Aushöhlungszone (62) miteinander verbindet. Die mittlere Aushöhlungszone (64) ist eine gekrümmte Ausnehmung, in der sich die Bohrung (67) und der Innenkonus (65), z.B. in kantenfreien tangentialen Übergängen, aneinander anschließen. Die Schnittstelle (71) liegt dabei im Abstand (72) unterhalb der Bezugsebene (38). Der Abstand beträgt hier z.B. 0,22 mm. Zudem liegt der Schnittpunkt zwischen der Bezugsebene (38) und der Mittellinie (69) vom Schnittpunkt zwischen der Öffnungsfläche entlang der Oberkante (66) der Schraubenkopfsitzfläche (65) und der Mittellinie (63) um eine Strecke entfernt, deren Länge mindestens 17 Prozent des mittleren Durchmessers der unteren Aushöhlungszone (62) beträgt. All dies ermöglicht eine tief im Suprastrukturträger (20) sitzende Schraube (90). Letztere befindet sich somit in der unteren Hälfte des Suprastrukturträgers (20).

In den Figuren 6 und 7 sind zwei Suprastrukturträger (20) dargestellt, deren Implantatflansch (31) jeweils anstelle einer ebenen Flanschoberseite eine kegelstumpfmantelförmige Abstützhüllfläche (75, 76) aufweist. Nach Figur 6 ist die Kegelstumpfmantelfläche (75) so orientiert, dass ihre gedachte Spitze im Bereich des Implantatpfostens (23) liegt. Der Kegelwinkel (78) beträgt nach Figur 6 z.B. 150 Winkelgrade. In diesem Fall wird die Bezugsebene (38) der Figur 5 durch die große Stirnfläche (77) des Kegelstumpfmantels (75) ersetzt. Die Stirnfläche (77) wird vom Rand (33) des Implantatflansches (31) aufgespannt.

Nach Figur 7 ist die kegelstumpfmantelförmige Abstützhüllfläche (76) des Implantatflansches (31) nach unten gewölbt, wodurch die gedachte Spitze des Kegelstumpfmantels in Richtung des Implantatzapfens (59) zeigt. Auch hier bildet die große Stirnfläche (77) die Bezugsebene (38), unterhalb welcher der Schnittpunkt (71) liegt. Der Kegelwinkel (78) misst nach Figur 7 z.B. 158 Winkelgrade.

Der Suprastrukturträger (20) ist ein schlankes dünnwandiges Bauteil, das über weite Bereiche nur geringe Wandstärkenschwankungen aufweist. Einzelne überdurchschnittliche Materialanhäufungen werden konstruktiv vermieden. Nach Figur 5 ist der Suprastrukturträger (20) in der Ebene längsgeschnitten, die durch die beiden Mittellinien (59) und (69) aufgespannt wird. In der halbseitigen Querschnittsfläche, die durch die Außen- und Aushöhlungskontur des Bauteils umschlossen wird, befindet sich an der Stelle der größten Materialanhäufung ein Messkreis (9), der an zwei Stellen an der Querschnittsaußenkontur und an einer Stelle an der Querschnittsinnenkontur anliegt. Dieser größte Messkreis (9) hat einen Durchmesser, der kleiner ist als 25 Prozent des mittleren Durchmessers der unteren Aushöhlungszone (62).

Auf den Suprastrukturträger (20) wird im Ausführungsbeispiel ein Klebekörper (100) aufgeklebt oder aufzementiert, vgl. Figuren 1 bis 3. Der Klebekörper (100) ist ein Hohlkörper, der innerhalb der Zahnprothese zwischen dem Suprastrukturträger (20) und der künstlichen Zahnkrone (120) angeordnet ist. Mit seiner Hilfe wird u.a. die Winkellage der Zahnkrone (120) an die Winkellage des Implantatpfostens (23) angeglichen.

Der Klebekörper (100) hat im Wesentlichen eine hülsenförmige, z.B. weitgehend rotationssymmetrische Gestalt. Seine Innenwandung (105) ist zumindest bereichsweise - in Radialrichtung - an die Hüllfläche (28) des Implantatpfostens (23) angepasst. Eine Ausnahme stellt die zwischen dem Klebekörper (100) und dem Suprastrukturträger (20) angeordnete Verdrehsicherung (41) dar.

Der Klebekörper (100) hat einen verbreiterten, z.B. umlaufenden Randbereich (107), mit dem er sich einerseits - in Axialrichtung - an der Flanschoberseite (37) des Suprastrukturträgers (20) abstützt und mit dem er andererseits selbst für die Krone (120) eine zumindest bereichsweise axiale Abstützung bietet.

Das Montagespiel zwischen dem tragenden Suprastrukturträger (20) und dem aufsetzbaren Klebekörper (100) beträgt z.B. 30 bis 50 um, so dass der Klebekörper (100) unter Zwischenlage eines Klebstoffes (113) auf dem Implantatpfosten (23) des Suprastrukturträgers (20) großflächig aufliegen kann.

Um verdrehsicher auf dem Suprastrukturträger (20) sitzen zu können, hat der Klebekörper (100) in seiner beispielsweise konischen Ausnehmung (106), z.B. im unteren Bereich, eine Nut (108), an deren Flanken sich der Verdrehsicherungssteg (41) des Suprastrukturträgers (20) abstützt. Im Bereich seiner Oberseite (102) weist er eine bohrungsartige Ausnehmung (106) auf, die bei montierter Prothese eine Verlängerung der Bohrung (67) des Implantatpfostens (23) darstellt. Die Ausnehmung (106) kann nach dem Festschrauben der Schraube (90) ggf. mit einem Füllstoff (8) befüllt werden.

Die Außensechskantschraube (90) ist in drei Bereiche aufgeteilt, einen Kopfbereich (91), einen Schaftbereich (96) und einen Gewindebereich (97), vgl. Figuren 1 und 3. Der erste Bereich ist der Kopfbereich (91). Er umfasst aus einem konusförmigen Kopfabschnitt (92) und eine darauf angeordnete Werkzeugaufnahme (94). Der z.B. 1,03 mm hohe Kopfabschnitt (92) hat die Form eines sich in Richtung Gewindebereich (97) verjüngenden Kegelstumpfes, der z.B. einen Kegelwinkel von 30 Winkelgraden aufweist. Der konusförmige Bereich, mit dem die Schraube (90) am Suprastrukturträger (20) anliegt, hat eine maximale Länge von z.B. 0,83 mm. Sein größter Durchmesser misst hier 2,06 mm.

Der Kopfabschnitt (92) endet in einer nach außen gewölbten, kegeligen Kopfabschnittstirnfläche (93), deren Kegelwinkel z.B. 160 Winkelgrade beträgt. Auf der Kopfabschnittstirnfläche (93) sitzt eine angeformte Werkzeugaufnahme (94), die einen kugelartigen Außensechskant für eine Schlüsselweite von 1,45 mm darstellt. Der Außensechskant weist sechs nebeneinander liegende Anlageflanken auf, die jeweils aus drei Flächenabschnitten bestehen. Der obere und der untere Flächenabschnitt (85, 86) erstreckt sich jeweils über z.B. 0,4 mm der Werkzeugaufnahmehöhe. Beide Flächenabschnitte sind eben und schließen mit der Schraubenmittellinie (89) jeweils z.B. einen Winkel von 11,5 Winkelgraden ein. Die oberen Enden der oberen Flächenabschnitte (85) neigen sich wie die unteren Enden der unteren Flächenabschnitte (86) zur Schraubenmittellinie (89) hin. Zwischen zwei übereinander angeordneten planen Flächenabschnitten (85, 86) ist jeweils ein bogenförmig nach außen gekrümmter Flächenabschnitt (87) angeordnet. Seine quer zur Schraubenmittellinie (89) orientierte Krümmung weist einen Radius von z.B. 0,9 mm auf.

Auf die Werkzeugaufnahme (94) ist zum Festziehen der Schraube (90) ein Rohrschlüssel mit Innensechskant aufsetztbar. Durch die spezielle Anordnung der oberen und unteren Flächenabschnitte (85, 86) erfährt der Rohrschlüssel bei der Drehmomentweitergabe keine Reaktionskraft entlang seiner Längsausdehnung. Die vordere Stirnseite des Rohrschlüssels wälzt auf der kegelstumpfmantelförmigen Kopfabschnittsstirnfläche (93) des Schraubenkopfes (92) reibungsarm und störungsfrei ab.

An den konusförmigen Bereich des Kopfabschnitts (92) schließt sich beispielsweise tangential der zweite Bereich, also der Schaftbereich (96) an. Der dehnschraubenartige Schaftbereich (96) besteht aus einer rotationssymmetrischen Taille, die im Schraubenmittenbereich, z.B. 3,5 mm vom freien Ende des Kopfbereiches (91) entfernt, ihren kleinsten Durchmesser, z.B. 1,3 mm, hat. Die mittlere Krümmung der Außenkontur der Taille hat im Schnitt nach Figur 3 einen Radius von z.B. 4,44 mm.

Der dritte Bereich ist der Gewindebereich (97). Er weist ein z.B. gerolltes M1,6-Gewinde auf, dessen nutzbare Länge z.B. 2,6 mm beträgt.

Nach dem Ausführungsbeispiel sitzt die Zahnkrone (120) auf einem Klebekörper (100). Demnach ist die Innenwandung (125) der Zahnkrone (120) an die Außenwandung (101) des Klebekörpers (100) angepasst. Auch hier liegt das sich zwischen der Außenwandung (101) und Innenwandung (125) befindende Spiel bei 30 bis 50 µm. Der Klebekörper (100) und die Zahnkrone (120) sind im Bereich des Randes (132) ihrer Klebefuge (131) so gestaltet, dass die letzten zehntel Millimeter in einem Winkel von 90 ± 10 Winkelgraden auf die gemeinsame Prothesenaußenfläche (2) treffen. Im Bereich des Randes ihrer Klebefuge (131) gehen die Außenfläche (121) der Zahnkrone (120) und die Außenfläche (101) des Klebekörpers (100) tangential oder zumindest fast tangential ineinander über. Sollte dort ein Knick vorgesehen sein, so liegt sein eingeschlossener Winkel in einem Bereich, der kleiner als 180 und größer als 175 Winkelgrade ist.

Nach Figur 3 sitzt somit bei der fertigen Prothese der Suprastrukturträger (20) mittels eines Implantatkonus (53) und des Verdrehsicherungsprofils (54) verdrehsicher und mittels der Schraube (90) verschraubt im Konussitz (14) des Implantatkörpers (10). Die Kontaktfläche (73), in der der Kopfabschnitt (92) in den Konussitz (14) die Schraubenklemmkraft einleitet, ist in Figur 3 gestrichelt umrandet und mit gestrichelten Diagonalen markiert.

Der Implantathals (52) und die Unterseite (32) des Implantatflansches (31) liegen in der Regel am hier nicht dargestellten Zahnfleisch an. Auf dem Implantatflansch (31) sitzt verklebt die Kombination aus dem Klebekörper (100) und der künstlichen Zahnkrone (120).

In der Druckschrift werden mehrere Textstellen erwähnt, nach denen Ebenen senkrecht, z.B. von Mittellinien, geschnitten sind. In diesen Fällen sollen Winkelabweichungen von ± 2 Winkelgraden noch zu senkrecht zählen.

### Bezugszeichenliste:

- 1: Zahnersatz, prothetisch
- 2: Prothesenaußenfläche
- 8: Zement, Klebstoff, Füllmasse
- 9: Messkreis

- 10: Implantatkörper
- 11: Außengewinde
- 12: Implantatschulter
- 13: Ausnehmung, gestuft
- 14: Innenkonus, erste Zone, Konus, Konussitz
- 15: Innensechskant, zweite Zone, Gegenprofil
- 17: Gewindebohrung, dritte Zone
- 18: Innengewinde
- 19: Mittellinie von (10)

- 20: Suprastrukturträger Teil eines Hybridabutments
- 21: Bereich, der Zahnkrone zugewandt
- 23: Implantatpfosten
- 24: Oberseite, Auflagefläche
- 26: Stollen
- 27: Außenfläche, radial
- 28: Hüllfläche
- 29: Mittellinie von (23)

- 31: Implantatflansch
- 32: Unterseite, dem Zahnfleisch zugewandte Fläche
- 33: Rand
- 34: Übergangsbereich, Ausrundung
- 35: Rinne
- 37: Flanschoberseite, Abstützhüllfläche
- 38: Ebene, Bezugsebene
- 41: Verdrehsicherungssteg, Verdrehsicherung

- 50: Implantatzapfen
- 51: Bereich, dem Implantatkörper zugewandt
- 52: Implantathals
- 53: Implantatkonus, Außenkonus
- 54: Verdrehsicherungsprofil, Außensechskant
- 59: Mittellinie von (50)

- 61: Aushöhlung, geknickt; Schraubeneinführausnehmung
- 62: untere Aushöhlungszone; Bohrung, zylindrisch
- 63: Mittellinie von (62)
- 64: mittlere Aushöhlungszone
- 65: Schraubenkopfsitzfläche, Innenkonus, Aushöhlungszone
- 66: Oberkante von (65)
- 67: obere Aushöhlungszone; Bohrung, zylindrisch
- 69: Mittellinie von (67)

- 71: Schnittpunkt
- 72: Abstand zwischen (38) und (71)
- 73: Kontaktfläche zwischen (65) und (92)
- 74: Rand, oben; von (73)
- 75: Kegelstumpfmantelfläche, Abstützhüllfläche; nach oben gewölbt
- 76: Kegelstumpfmantelfläche, Abstützhüllfläche; nach unten gewölbt
- 77: Stirnfläche, groß von (75) oder (76)
- 78: Kegelwinkel von (75) oder (76)
- 85, 86: Flächenabschnitte von (94), plan
- 87: Flächenabschnitte von (94), gekrümmt
- 89: Schraubenmittellinie

- 90: Außensechskantschraube, Schraube
- 91: Kopfbereich
- 92: Kopfabschnitt, konusförmig; Schraubenkopf
- 93: Kopfabschnittstirnfläche
- 94: Werkzeugaufnahme; Außensechskant, kugelartig
- 96: Schaftbereich, Taille, Schaft
- 97: Gewindebereich, Gewinde

- 100: Klebekörper, Teil eines Hybridabutments
- 101: Außenwandung, Außenfläche
- 102: Oberseite
- 105: Innenwandung, Innenfläche
- 106: Ausnehmung, kegelstumpfmantelförmig
- 107: Randbereich
- 108: Nut
- 111: Klebefuge zwischen (23) und (100)
- 113: Klebstoff

- 120: Zahnkrone, künstlich, Suprakonstruktion
- 121: Außenwandung, Außenfläche
- 125: Innenwandung, Innenfläche
- 131: Klebefuge zwischen (100) und (120)
- 132: Klebefugenrand
- 133: Klebstoff

## Patentansprüche

1. Suprastrukturträger (20) als Teil eines prothetischen Zahnersatzes (1) zwischen einem Implantatkörper (10) und einer Suprakonstruktion, mit einem hohlen Implantatpfosten (23), einem hohlen Implantatzapfen (50) und einem dazwischen liegenden Implantatflansch (31), wobei Aushöhlungszonen (67, 62, 64) des Implantatpfostens (23) und des Implantatzapfens (50) - zur Durchführung und Aufnahme einer den Suprastrukturträger (20) und den Implantatkörper (10) verbindenden Schraube (90) - ineinander übergehen,
- wobei eine obere und eine untere Aushöhlungszone (67, 62) jeweils eine Mittellinie (69, 63) hat, die sich beide in einer mittleren Aushöhlungszone (64) schneiden,
- wobei sich an die untere Aushöhlungszone (62) des Implantatzapfens (50) eine sich zum Implantatflansch (31) aufweitende Schraubenkopfsitzfläche (65) anschließt,
- wobei sich zwischen der oberen Aushöhlungszone (67) und der Schraubenkopfsitzfläche (65) eine mittlere Aushöhlungszone (64) befindet, die eine gekrümmte Ausnehmung ist, in der sich die obere Aushöhlungszone (67) als zylindrische Bohrung und die Schraubenkopfsitzfläche (65) als Innenkonus, in kantenfreien tangentialen Übergängen aneinander anschließen,
- wobei zumindest Bereiche des Implantatflansches (31) eine zum Implantatpfosten (23) orientierte Abstützhüllfläche (37) bilden, deren äußerer Rand (33) eine Bezugsebene (38) aufspannt, die von der Mittellinie (69) der unteren pfostenseitigen Aushöhlungszone (67) senkrecht geschnitten wird und
- wobei sich die beiden Mittellinien (69, 63) unterhalb der Bezugsebene (38) schneiden oder kreuzen.

2. Suprastrukturträger nach Anspruch 1, **dadurch gekennzeichnet, dass** die Abstützhüllfläche (37) entweder in der Bezugsebene (38) liegt oder eine Kegelstumpfmantelfläche (75, 76) eines Kegelstumpfes ist, dessen Kegelwinkel (78) zwischen 180 und 165 Winkelgraden liegt und dessen größere Stirnfläche (77) die Bezugsebene (38) darstellt.

3. Suprastrukturträger nach Anspruch 2, **dadurch gekennzeichnet, dass** die Schraubenkopfsitzfläche (65) konisch, sphärisch oder ellipsoid gekrümmt ist oder in anderer Weise ihren quer zur Rotationsachse der Schraubenkopfsitzfläche (65) gelegenen Querschnitt ändert.

4. Suprastrukturträger nach Anspruch 3, **dadurch gekennzeichnet, dass** die Schraubenkopfsitzfläche (65) unterhalb der Bezugsebene (38) angeordnet ist.

5. Suprastrukturträger nach Anspruch 3, **dadurch gekennzeichnet, dass** der Schnittpunkt (71) zwischen der Bezugsebene (38) und der Mittellinie (69) vom Schnittpunkt zwischen der Öffnungsfläche entlang des oberen Randes (74) des Bereichs der Kontaktfläche (73) an der die Schraube (90) anliegt und der Mittellinie (63) um eine Strecke (72) entfernt liegt, deren Länge mindestens 17 Prozent des mittleren Durchmessers der unteren Aushöhlungszone (62) beträgt.

6. Suprastrukturträger nach Anspruch 1, **dadurch gekennzeichnet, dass** jeder halbseitige Längsschnitt des Suprastrukturträgers (20), bei dem die Schnittebene von den Mittellinien (59) und (69) aufgespannt wird, keinen Messkreis (9) einschließt, dessen Durchmesser größer ist als 25 Prozent des mittleren Durchmessers des Implantatkonus (53).

7. Suprastrukturträger nach Anspruch 6, **dadurch gekennzeichnet, dass** die verschiedenen Aushöhlungszonen (67, 65, 64, 62) des Suprastrukturträgers (20) harmonisch ineinander übergehen.

## Claims

1. Superstructure support (20) as part of a prosthetic tooth replacement (1) between an implant body (10) and a superstructure, with a hollow implant post (23), a hollow implant pin (50) and an implant flange (31) disposed therebetween, wherein cavity zones (67, 62, 64) of the implant post (23) and the implant pin (50) transition into each other to enable the passage and accommodation of a screw (90) that connects the superstructure support (20) and the implant body (10),
- wherein the upper and lower cavity zones (67, 62) each have a centre line (69, 63), which lines intersect in a middle cavity zone (64),
- wherein a screw head seat surface (65), which widens to form the implant flange (31), adjoins the lower cavity zone (62) of the implant pin (50),
- wherein a middle cavity zone (64) exists between the upper cavity zone (67) and the screw head seat surface (65), the middle cavity zone having the form of a curved recess in which the upper cavity zone (67) as a cylindrical borehole and the screw head seat surface (65) as an internal cone adjoin one another with seamless tangential transitions,
- wherein at least regions of the implant flange (31) form a supporting enveloping surface (37) which is orientated toward the implant post (23) and whose outer edge (33) spans a reference plane (38) which is intersected perpendicularly by the centre line (69) of the lower post-side cavity zone (67), and
- wherein the two centre lines (69, 63) intersect or cross each other below the reference plane (38).

2. Superstructure support according to Claim 1, **characterized in that** the supporting enveloping surface (37) either lies in the reference plane (38) or is a truncated cone surface (75, 76) of a truncated cone whose cone angle (78) is between 180 and 165 degrees and whose larger end face (77) represents the reference plane (38).

3. Superstructure support according to Claim 2, **characterized in that** the screw head seat surface (65) is curved conically, spherically or ellipsoidally, or its cross section transverse to the axis of rotation of the screw head seat surface (65) changes in another way.

4. Superstructure support according to Claim 3, **characterized in that** the screw head seat surface (65) is arranged below the reference plane (38).

5. Superstructure support according to Claim 3, **characterized in that** the distance from the intersection point (71) between the reference plane (38) and the centre line (69) to the intersection point between the opening surface along the upper edge (74) of the contact surface (73) region on which the screw (90) bears and the centre line (63) constitutes a segment (72) which is at least 17 percent as long as the average diameter of the lower cavity zone (62).

6. Superstructure support according to Claim 1, **characterized in that** each half-side longitudinal section of the superstructure support (20) in which the sectional plane is spanned by the centre lines (59) and (69), does not enclose a measuring circle (9) with a diameter larger than 25 percent of the average diameter of an implant cone (53).

7. Superstructure support according to Claim 6, **characterized in that** the various cavity zones (67, 65, 64, 62) of the superstructure support (20) transition into each other smoothly.

## Revendications

1. Support de superstructure (20), faisant partie d'une prothèse dentaire (1), situé entre un corps d'implant (10) et une superstructure, comprenant un pilier d'implant (23) creux, un tenon d'implant (50) creux et un épaulement d'implant (31) situé entre ces deux derniers éléments, des zones creuses (67, 62, 64) du pilier d'implant (23) et du tenon d'implant (50) passant directement l'un dans l'autre pour y faire passer et y loger une vis (90) reliant le support de superstructure (20) et le corps d'implant (10),
- une zone de creux (67, 62) inférieure et supérieure détenant respectivement une ligne médiane (69, 63), les deux se recoupant dans une zone de creux (64) médiane,
- sur la zone de creux (62) inférieure du tenon d'implant (50) se raccordant une surface d'assise de tête de vis (65) qui s'élargit en direction de l'épaulement d'implant (31),
- entre la zone de creux (67) supérieure et la surface d'assise de tête de vis (65) se trouvant une zone de creux (64) médiane, qui est un évidement curviligne, dans lequel la zone de creux (67) supérieure sous la forme d'un perçage cylindrique et la surface d'assise de tête de vis (65) sous la forme d'un cône intérieur se raccordent l'une sur l'autre dans des transitions tangentielles sans arêtes,
- au moins des régions de l'épaulement d'implant (31) formant une surface enveloppante d'appui (37) orientée en direction du pilier d'implant (23), dont le bord extérieur (33) définit un plan de référence (38), qui est recoupé à la perpendiculaire par la ligne médiane (69) de la zone de creux (67) inférieure du côté pilier, et
- les deux lignes médianes (69, 63) se recoupant ou se croisant en-dessous du plan de référence (38).

2. Support de superstructure selon la revendication 1, **caractérisé en ce que** la surface enveloppante d'appui (37) se situe soit dans le plan de référence (38) ou est une surface d'enveloppe tronconique (75, 76) d'un cône tronqué, dont l'angle du cône (78) se situe entre 180 et 165 degrés et dont la face frontale (77) la plus grande représente le plan de référence (38).

3. Support de superstructure selon la revendication 2, **caractérisé en ce que** la surface d'assise de tête de vis (65) est recourbée en cône, en sphère, en ellipse ou change d'une autre manière sa surface transversale située à la transversale de l'axe de rotation de la surface d'assise de tête de vis (65).

4. Support de superstructure selon la revendication 3, **caractérisé en ce que** la surface d'assise de tête de vis (65) est placée en-dessous du plan de référence (38).

5. Support de superstructure selon la revendication 3, **caractérisé en ce que** le point d'intersection (71) entre le plan de référence (38) et la ligne médiane (69) est éloigné du point d'intersection entre la surface d'ouverture le long du bord supérieur (74) de la région de la surface de contact (73) à laquelle la vis (90) est adjacente et la ligne médiane (63) de la valeur d'un trajet (72) dont la longueur correspond à au moins 17 pour cent du diamètre moyen de la zone de creux (62) inférieure.

6. Support de superstructure selon la revendication 1, **caractérisé en ce que** chaque coupe longitudinale unilatérale du support de superstructure (20), sur laquelle est défini le point d'intersection des lignes médianes (59) et (69) n'inclut aucun cercle de mesure (9) dont le diamètre est supérieur à 25 pour cent du diamètre moyen du cône d'implant (53).

7. Support de superstructure selon la revendication 6, **caractérisé en ce que** les différentes zones creuses (67, 65, 64, 62) du support de superstructure (20) passent harmonieusement les unes dans les autres.
